# EUROPÄISCHE PATENTSCHRIFT

(11) **EP 2 145 377 B1**
(45) Veröffentlichungstag und Bekanntmachung des Hinweises auf die Patenterteilung: **25.07.2012**
(21) Anmeldenummer: 08750028.6
(22) Anmeldetag: 05.05.2008
(51) Int. Cl.: H02K 16/00, H02K 41/02

(54) **LINEARANTRIEBSMODUL FÜR EINEN DREH-LINEAR-ANTRIEB**
LINEAR DRIVE MODULE FOR A ROTARY-LINEAR DRIVE
MODULE D'ENTRAÎNEMENT LINÉAIRE POUR UN MÉCANISME D'ENTRAÎNEMENT ROTATIF ET LINÉAIRE

(30) Priorität: 07.05.2007 DE 102007021322
(43) Veröffentlichungstag der Anmeldung: 20.01.2010
(73) Patentinhaber: Siemens Aktiengesellschaft, 80333 München (DE)
(72) Erfinder: BUDDE, Thomas, 97072 Würzburg (DE); INALKAC, Aziz, 47506 Neukirchen-Vluyn (DE); TOLDONOV, Mykhaylo, 96052 Bamberg (DE); VOLLMER, Rolf, 36129 Gersfeld (DE)
(86) Internationale Anmeldenummer: PCT/EP2008/055466
(87) Internationale Veröffentlichungsnummer: WO 2008/135543

(56) Entgegenhaltungen:
- EP-A- 0 875 982
- US-A- 5 051 635
- US-B1- 6 362 547
- US-B1- 6 433 447

## Beschreibung

Die vorliegende Erfindung betrifft ein Linearantriebsmodul zum Anbau an einen Rotationsantrieb, so dass eine Dreh-Linear-Bewegung einer Welle erzeugbar ist. Darüber hinaus betrifft die vorliegende Erfindung einen Drehlinearantrieb mit einem derartigen Linearantriebsmodul.

Als Antrieb, insbesondere für Hub-Schwenk-Antriebe im Handlingsbereich, z.B. für Greifer (pick and place), oder ähnliche Anwendungen, ist es erforderlich, eine rotatorische und eine lineare Bewegung auf der Abtriebswelle zu realisieren. Diese Bewegungen müssen einerseits unabhängig voneinander, aber auch überlagert zu erzeugen sein.

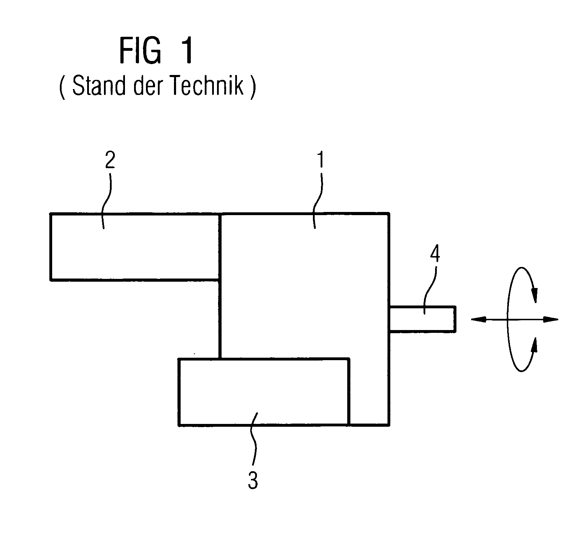

Bislang wurde eine rotatorische und eine lineare Bewegung einer Abtriebswelle durch den Einsatz eines Hub-Schwenk-Getriebes und zwei Standardmotoren realisiert. Ein Beispiel eines solchen Antriebs ist in FIG 1 dargestellt. Ein Hub-Schwenk-Getriebe 1 wird einerseits von einem Servomotor 2 für die Hubachse und andererseits von einem Servomotor 3 für die Drehachse angetrieben. Einer der beiden Servomotoren dient also zur Erzeugung der rotatorischen Bewegung und der andere zur Erzeugung der linearen Bewegung. Mit dem Getriebe 1 ist dann die kombinierte Dreh-Linear-Bewegung erzeugbar, die die Abtriebswelle 4 vollführt. Ein Antrieb entsprechend der Bauform von FIG 1 ist beispielsweise von der Firma Schwaben Präzision bekannt. Nachteilig an dieser Bauform ist jedoch das verhältnismäßig teure Hub-Schwenk-Getriebe 1.

Aus der Dissertation von Do Quoc Chinh,"Elektromechanische Antriebselemente zur Erzeugung kombinierter Dreh- und Schub-Bewegungen für die Gerätetechnik", TU Dresden, Fakultät Elektrotechnik, 1987, Seiten 31 bis 33 sind Kombinationen von Antriebseinheiten bekannt. Hierbei besteht die Aufgabe, zwei separate Antriebselemente für Dreh- und Schub-Bewegungen mittels mechanischer Elemente miteinander zu verkoppeln. An solche Kopplungen werden meist sehr hohe Anforderungen bezüglich hoher Dynamik, guter Bewegungsübertragung und hoher Zuverlässigkeit gestellt. Als Kopplungselemente sind Schubgelenke, Kupplungen oder Zahnradgetriebe einsetzbar. Konkret wird beispielsweise eine Serienanordnung und eine Parallelanordnung mit jeweils einem gestellfesten Schub- und Drehantrieb vorgestellt.

Aus der Druckschrift US 6 433 447 B1 ist ein Aktuator zum Erzeugen einer Dreh-Linear-Bewegung einer Welle mit einem Linearmotor, dessen Läufer drehbeweglich ist, von einem Stator linear bewegt wird und ein Abtriebselement aufweist, um die Welle drehlinear anzutreiben, bekannt. Der Aktuator weist außerdem eine antriebsseitige, drehbare Aufnahmeeinrichtung zum Aufnehmen eines Drehmoments von einer Antriebswelle eines Rotationsantriebs und eine Kopplungseinrichtung, die die Aufnahmeinrichtung und den Läufer drehfest, aber nicht linear miteinander koppelt, auf. Der Linearmotor und der Rotationsantrieb sind in einem gemeinsamen Gehäuse untergebracht.

In der Patentschrift US 5 051 635 A ist eine Zahnwelle für einen Roboterarm beschrieben. Sie besitzt mehrere in Umfangesrichtung verlaufende Nuten und zwei gegenüberliegende Längsnuten. Eine Hülse mit einem Paar endlos umlaufender Pfade, in denen Kugeln laufen, ist auf die Welle aufgebracht. Die Hülse ist mit Kugellagern an einem Gehäuse befestigt. Dadurch kann die Welle zusammen mit der Hülse relativ zu dem Gehäuse rotieren, und die Welle lässt sich relativ zu dem Gehäuse in Längsrichtung bewegen.

Die Aufgabe der vorliegenden Erfindung besteht somit darin, eine Dreh-Linear-Bewegung mit hoher Präzision durch einen günstigeren Antrieb zu erzeugen.

Erfindungsgemäß wird diese Aufgabe gelöst durch ein Linearantriebsmodul **nach Anspruch 1.**

In vorteilhafter Weise ist es somit möglich, einen Kombinationsantrieb in modularer Bauweise zur Verfügung zu stellen. Durch den Linearmotor des Linearantriebsmoduls kann einerseits eine sehr präzise Linearbewegung erzeugt werden, und andererseits kann damit auf das teure Hub-Schwenk-Getriebe verzichtet werden. Nach wie vor kann jedoch für den Rotationsantrieb ein Standard-Servo-Motor eingesetzt werden.

**Die** Kopplungseinrichtung des erfindungsgemäßen Linearantriebsmoduls **besitzt** eine Drehmomentenkugelbuchse. Mit ihr ist es möglich, das Drehmoment eines Rotationsantriebs unabhängig von der linearen Bewegung einer Abtriebswelle auf diese fast verlustfrei einzukoppeln.

Die Kopplungseinrichtung **ist außerdem** einteilig mit der Aufnahmeeinrichtung gebildet sein. Insbesondere **dient** die Drehmomentenkugelbuchse als Aufnahmeeinrichtung, so dass auf weitere Aufnahmemechaniken verzichtet werden kann.

Das erfindungsgemäße Linearantriebsmodul kann ferner über einen Lagegeber und einen damit geregelten eigenen Umrichter für den Linearmotor verfügen. Damit kann der Linearantrieb vollkommen unabhängig von dem Rotationsantrieb geregelt werden.

Vorteilhaft ist es weiterhin, wenn das Linearantriebsmodul als Abtriebselement eine Abtriebswelle aufweist, die starr mit dem Läufer des Linearmotors verbunden ist, wobei ein dreh-invarianter Lagegeber an der Abtriebswelle angeordnet ist. Dies erlaubt eine sehr hohe lineare Positioniergenauigkeit des Antriebs.

Wie oben bereits angedeutet wurde, lässt sich mit dem Linearantriebsmodul besonders vorteilhaft ein Dreh-Linear-Antrieb aufbauen, indem an das Linearantriebsmodul ein Rotationsantrieb angebaut wird. Dabei kann das Koppeln des Rotationsantriebs an das Linearantriebsmodul direkt erfolgen. Dies führt zu einem sehr kompakten und verlustarmen Dreh-Linear-Antrieb.

Entsprechend einer alternativen Ausführungsform können aber auch der Rotationsantrieb und das Linearantriebsmodul über ein Getriebe oder einen Zahnriemen aneinandergekoppelt sein. Damit kann das Drehmoment und die Drehzahl des Rotationsantriebs in gewünschter Weise eingestellt werden.

Entsprechend einer weiteren Bauform können der Rotationsantrieb und das Linearantriebsmodul nebeneinander angeordnet sein, so dass ihre Achsen zueinander parallel verlaufen. Auf diese Weise kann ein axial kurzer Dreh-Linear-Antrieb realisiert werden.

Die vorliegende Erfindung ist anhand der beigefügten Zeichnungen näher erläutert, in denen zeigen:
- FIG 1: einen Hub-Schwenk-Antrieb gemäß dem Stand der Technik;
- FIG 2: einen Längsschnitt durch einen erfindungsgemäßen Dreh-Linear-Antrieb mit Linearanbaumodul;
- FIG 3: den Dreh-Linear-Antrieb von FIG 2 in einer Außenansicht;
- FIG 4: eine alternative Ausführungsform eines erfindungsgemäßen Dreh-Linear-Antriebs mit Getriebe und
- FIG 5: eine weitere Ausführungsform eines erfindungsgemäßen Dreh-Linear-Antriebs mit Getriebe.

Die nachfolgend näher geschilderten Ausführungsformen stellen bevorzugte Ausführungsbeispiele der vorliegenden Erfindung dar.

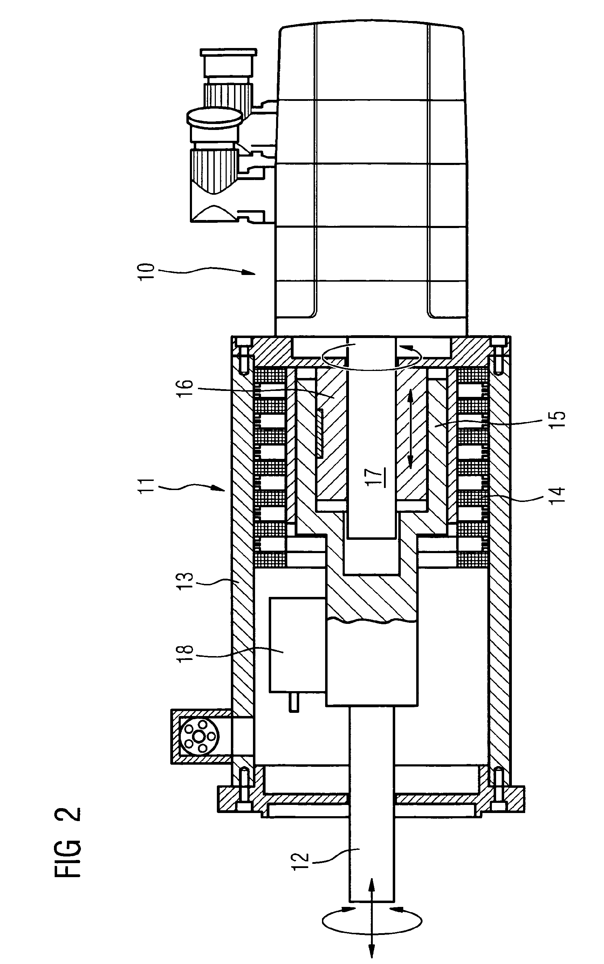

Das in FIG 2 wiedergegebene Beispiel zeigt einen Dreh-Linear-Antrieb mit einem Rotationsantrieb 10 und einem Linearanbaumodul 11. Beide sind koaxial aneinandergekoppelt. Der Drehantrieb 10 kann aus einem Standard-Servo-Motor oder einem Standard-Servogetriebe-Motor aufgebaut sein. In jedem Fall lässt sich so eine überlagerte und unabhängig voneinander realisierbare rotatorische und lineare Bewegung auf eine Abtriebswelle 12 übertragen.

Das Linearanbaumodul 11 besteht im Wesentlichen aus einem Linearmotor, der in einem Gehäuse 13 untergebracht ist. Der Linearmotor besitzt einen Stator 14 und einen auch drehbeweglichen Läufer 15. Der Läufer 15 ist hier in etwa topfförmig ausgebildet und weist in seinem Inneren eine Drehmomentenkugelbuchse 16 auf. Sie ist fest, insbesondere drehfest mit dem Läufer 15 verbunden.

Im Inneren der Drehmomentenkugelbuchse 16 verläuft die Welle 17 des Rotationsantriebs 10. Diese Welle 17 ist mit der Drehmomentenkugelbuchse 16 drehfest verbunden. Die Welle 17 weist daher entsprechende Längsnuten auf. Da die Drehmomentenkugelbuchse 16 ausschließlich für eine drehfeste Verbindung zwischen Welle 17 und Läufer 15 sorgt, ist der Läufer 15 in seiner Linearbewegung von der Welle 17 entkoppelt.

Das Linearanbaumodul 11 dient somit zur Überlagerung der linearen Bewegung und der rotatorischen Bewegung, so dass am Ende der Abtriebswelle 12 eine Dreh-Linear-Bewegung abgegriffen werden kann. Bei der Übertragung der Drehbewegung des rotatorischen Motors 10 auf die Abtriebswelle 12 bietet die Drehmomentenkugelbuchse 16 also einen linearen Freiheitsgrad, so dass der Linearmotor die Abtriebswelle 12 des Linearanbaumoduls 11 beliebig linear positionieren kann und gleichzeitig in jeder beliebigen linearen Position die Drehbewegung übertragen kann.

In dem vorliegenden Beispiel ist der Rotor bzw. Läufer 15 des Linearmotors starr mit der Abtriebswelle 12 verbunden. Außerdem ist ein dreh-invarianter, linearer Lagegeber 18 am Ende der Abtriebswelle 12 des Linearanbaumoduls 11 angeordnet. Dadurch lässt sich eine hohe lineare Positioniergenauigkeit erzielen.

Hinsichtlich der Regelbarkeit des Antriebs ist es weiterhin von Vorteil, wenn sowohl der rotatorische als auch der lineare Motor jeweils über einen eigenen Lagegeber sowie einen separaten Umrichter verfügen. Weiterhin kann es notwendig sein, dass das Linearanbaumodul 11 und/oder der Rotationsantrieb 10 mit einer Temperatursensorik versehen ist.

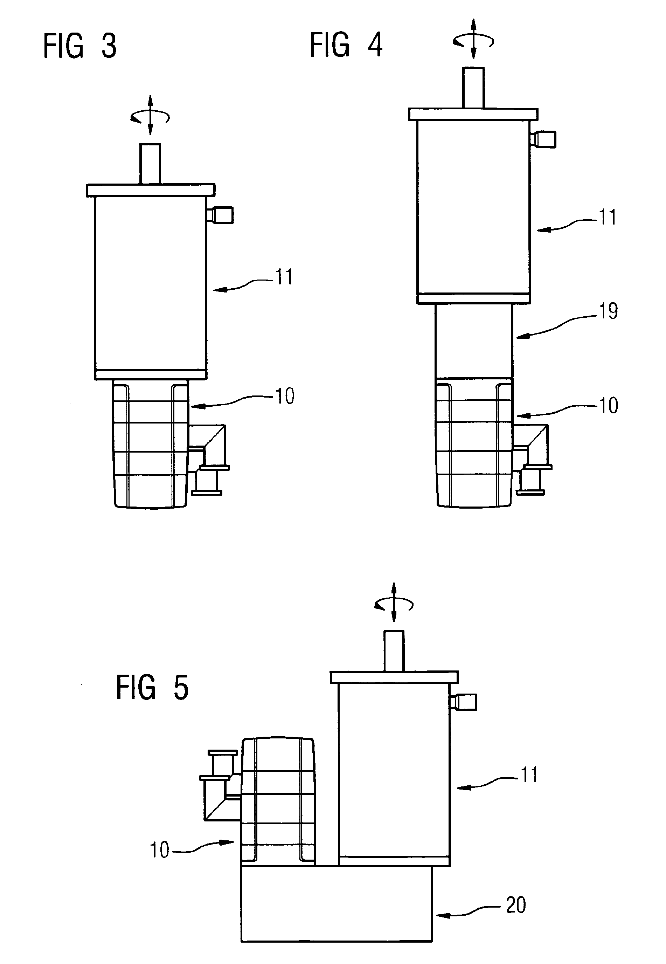

In den FIG 3 bis 5 sind unterschiedliche Ausführungsbeispiele des erfindungsgemäßen Dreh-Linear-Antriebs dargestellt. Diese unterschiedlichen Ausführungsformen sind deswegen leicht zu realisieren, da der Kombinationsantrieb einen modularen Aufbau besitzt. Es kann also ein Standard-Servo-(Getriebe)-Motor mit einem erfindungsgemäßen Linearanbaumodul kombiniert werden.

FIG 3 zeigt die Variante eines Dreh-Linear-Antriebs mit rotatorischen Direktantrieb wie in dem Beispiel von FIG 2 jedoch in der Außenansicht. Der rotatorische Servomotor 10 ist also hier direkt an das Linearanbaumodul 11 gekoppelt. Dies führt zu einem kompakten, verlustarmen Antrieb.

Entsprechend dem Beispiel von FIG 4 kann das Linearanbaumodul 11 auch über ein Getriebe 19 an den rotatorischen Servomotor 10 gekoppelt sein. Das Getriebe 19 sorgt für die gewünschte Drehzahl beziehungsweise das gewünschte Drehmoment, die/das auch an der Abtriebswelle 12 des Linearanbaumoduls 11 zur Verfügung steht.

Entsprechend dem Ausführungsbeispiel von FIG 5 sind der rotatorische Servomotor 10 und das Linearanbaumodul 11 nicht linear in Reihe geschaltet, sondern parallel nebeneinander angeordnet, so dass ihre Drehachsen parallel zueinander verlaufen. Der gesamte Antrieb bekommt dann etwa eine U-Form, wobei der verbindende Schenkel durch ein Getriebe bzw. eine Zahnriemenanordnung 20 gebildet wird. Hierdurch kann der Kombinationsantrieb axial sehr kurz ausgebildet werden.

Durch das erfindungsgemäße Linearanbaumodul kann somit auf eine kostenintensive Antriebskombination aus Standardmotoren und einem Sondergetriebe, das bei der Umsetzung der rotatorischen Antriebsbewegung in eine kombinierte linear/rotatorische Vorschubbewegung üblicherweise Verwendung findet, verzichtet werden. Dies führt zu einer Kosteneinsparung für den Gesamtantrieb. Ferner ist das Antriebssystem wesentlich einfacher zu regeln und es werden verschleißbehaftete, mechanische Komponenten durch verschleißfreie Bauteile ersetzt, wodurch eine längere Standzeit des Antriebs erzielt wird.

## Patentansprüche

1. Linearantriebsmodul (11) zum Anbau an einen Rotationsantrieb (10), so dass eine Dreh-Linear-Bewegung einer Welle erzeugbar ist, mit
- einem eigenen Gehäuse (13), in dem eine Aufnahmeeinrichtung, ein Linearmotor und eine Kopplungseinrichtung untergebracht sind,
- der antriebsseitigen, drehbaren Aufnahmeeinrichtung zum Aufnehmen eines Drehmoments von einer Antriebswelle (17) des Rotationsantriebs (10) und zum lösbaren, drehfesten Verbinden mit der Antriebswelle (17),
- dem Linearmotor, dessen Läufer (15) drehbeweglich ist, von einem Stator (14) linear bewegt wird und ein Abtriebselement aufweist, um die Welle dreh-linear anzutreiben, und
- der Kopplungseinrichtung (16), die die Aufnahmeeinrichtung und den Läufer (15) drehfest, aber nicht linear miteinander koppelt,
**dadurch gekennzeichnet, dass**
- die Kopplungseinrichtung (16) eine Drehmomentenkugelbuchse aufweist und
- die Kopplungseinrichtung (16) einteilig mit der Aufnahmeeinrichtung gebildet ist.

2. Linearantriebsmodul nach Anspruch 1, das über einen Lagegeber (18) und einem damit geregelten eigenen Umrichter für den Linearmotor verfügt.

3. Linearantriebsmodul nach einem der vorhergehenden Ansprüche, das als Abtriebselement eine Abtriebswelle (12) aufweist, die starr mit dem Läufer (15) des Linearmotors verbunden ist, wobei ein dreh-invarianter Lagegeber (18) an der Abtriebswelle (12) angeordnet ist.

4. Drehlinearantrieb mit einem Rotationsantrieb (10) und einem daran angebauten Linearantriebsmodul (11) nach einem der vorhergehenden Ansprüche.

5. Drehlinearantrieb nach Anspruch 4, wobei der Rotationsantrieb (10) und das Linearantriebsmodul (11) direkt aneinander gekoppelt sind.

6. Drehlinearantrieb nach Anspruch 4, wobei der Rotationsantrieb (10) und das Linearantriebsmodul (11) über ein Getriebe (19, 20) oder einen Zahnriemen aneinander gekoppelt sind.

7. Drehlinearantrieb nach Anspruch 6, wobei der Rotationsantrieb (10) und das Linearantriebsmodul (11) nebeneinander angeordnet sind, so dass ihre Achsen zueinander parallel verlaufen.

## Claims

1. Linear drive module (11) to be built onto a rotary drive (10), so that a rotary/linear movement of a shaft can be generated, with
- a specific housing (13), in which a reception device, a linear motor and a coupling device are accommodated,
- the drive-side rotatable reception device for receiving a torque from a drive shaft (17) of the rotary drive (10) and for releasable rotationally fixed connection to the drive shaft (17),
- the linear motor, the rotor (15) of which is movable in rotation, is moved linearly by a stator (14) and has an output element in order to drive the shaft in a rotary/linear manner, and
- the coupling device (16) which couples the reception device and the rotor (15) to one another fixedly in terms of rotation, but not linearly,
**characterized in that**
- the coupling device (16) has a torque-transmitting spherical liner, and
- the coupling device (16) is formed in one part with the reception device.

2. Linear drive module according to Claim 1, which has a position encoder (18) and a specific converter, regulated thereby, for the linear motor.

3. Linear drive module according to one of the preceding claims, which has as an output element an output shaft (12) which is connected rigidly to the rotor (15) of the linear motor, a rotation-invariant position encoder (18) being arranged on the output shaft (12).

4. Rotary/linear drive with a rotary drive (10) and with alinear drive module (11) according to one of the preceding claims which is built on the latter.

5. Rotary/linear drive according to Claim 4, the rotary drive (10) and the linear drive module (11) being coupled to one another directly.

6. Rotary/linear drive according to Claim 4, the rotary drive (10) and the linear drive module (11) being coupled to one another via a gear (19, 20) or a toothed belt.

7. Rotary/linear drive according to Claim 6, the rotary drive (10) and the linear drive module (11) being arranged next to one another, so that their axes run parallel to one another.

## Revendications

1. Module (11 ) d'entraînement linéaire à rapporter sur un entraînement ( 6 ) en rotation, de manière à pouvoir produire un mouvement linéaire et de rotation d'un arbre, comprenant
- un carter ( 13 ) propre dans lequel sont logés un dispositif de réception, un moteur linéaire et un dispositif d'accouplement,
- le dispositif de réception tournant et du côté de l'entraînement pour la réception d'un couple de rotation d'un arbre ( 17 ) d'entraînement, de l'entraînement ( 10 ) en rotation et pour la solidarisation en rotation de manière amovible avec l'arbre ( 7 ) d'entraînement,
- le moteur linéaire, dont le rotor ( 15 ) est mobile en rotation, est déplacé linéairement par un stator ( 14 ) et comporte un élément de sortie pour entraîner l'arbre en rotation et linéairement, et
- le dispositif ( 16 ) d'accouplement, qui solidarise en rotation le dispositif de réception et le rotor ( 15 ), mais ne les accouple pas entre eux linéairement,
**caractérisé en ce que**
- le dispositif ( 16 ) d'accouplement comporte un coussinet à billes de couple de rotation, et
- le dispositif ( 16 ) d'accouplement est formé d'une seule pièce avec le dispositif de réception.

2. Module d'entraînement linéaire suivant la revendication 1, qui dispose d'un transmetteur ( 18 ) de position et d'un convertisseur propre ainsi réglé pour le moteur linéaire.

3. Module d'entraînement linéaire suivant l'une des revendications précédentes, qui a comme élément de sortie un arbre ( 12 ) de sortie, qui est relié rigidement au rotor ( 15 ) du moteur linéaire, un transmetteur ( 18 ) de position invariant en rotation étant monté sur l'arbre ( 12 ) de sortie.

4. Entraînement linéaire et en rotation, comprenant un entraînement ( 10 ) en rotation et un module d'entraînement linéaire qui y est rapporté suivant l'une des revendications précédentes.

5. Entraînement linéaire et en rotation suivant la revendication 4, dans lequel l'entraînement ( 10 ) en rotation et le module ( 11 ) d'entraînement linéaire sont accouplés directement l'un contre l'autre.

6. Entraînement linéaire et en rotation suivant la revendication 4, dans lequel l'entraînement ( 10 ) en rotation et le module ( 11 ) d'entraînement linéaire sont accouplés l'un à l'autre par un engrenage ( 19, 20 ) ou par une courroie dentée.

7. Entraînement linéaire et en rotation suivant la revendication 6, dans lequel l'entraînement ( 10 ) en rotation et le module ( 11 ) d'entraînement linéaire sont disposés l'un à côte de l'autre de sorte que leurs axes s'étendent parallèlement l'un à l'autre.
